# EUROPEAN PATENT SPECIFICATION

(11) **EP 4 342 564 B1**
(45) Date of publication and mention of the grant of the patent: **15.04.2026**
(21) Application number: 22196493.5
(22) Date of filing: 20.09.2022
(51) Int. Cl.: B01D 46/24, B01D 46/64

(54) **GAS FILTER SYSTEM**
GASFILTERSYSTEM
SYSTÈME DE FILTRATION DE GAZ

(43) Date of publication of application: 27.03.2024
(73) Proprietor: MANN+HUMMEL GmbH, 71636 Ludwigsburg (DE)
(72) Inventor: NEEF, Pascal, 78647 Trossingen (DE); WITTMERS, Christoph, 74321 Bietigheim-Bissingen (DE); WEBER, Andreas, 71691 Freiberg (DE); STARK, Dennis, 69256 Mauer (DE); RIEGER, Mario, 71638 Ludwigsburg (DE); HANSELMANN, Markus, 74348 Lauffen (DE); PEKNY, Peter, 95339 Neuenmarkt (DE); HALLBAUER, Eva, 95502 Himmelkron (DE); SCHMID, Daniel, 74343 Sachsenheim (DE); GERLACH, Steffen, 71154 Nufringen (DE); KUPFER, Friedrich, 84163 Marklkofen (DE); HETTKAMP, Philipp, 71711 Steinheim (DE); GRAD, Johannes, 94436 Simbach (DE); PEREIRA MADEIRA, Pedro Miguel, 74321 Bietigheim-Bissingen (DE); WEISS, Dieter, 95482 Gefrees (DE)
(74) Representative: Mann + Hummel Intellectual Property

(56) References cited:
- EP-A1- 1 036 585
- WO-A1-2022/194544
- US-A- 5 250 179
- US-A- 6 093 231
- US-A1- 2019 240 602

## Description

### Technical field

The present invention refers to a gas filter system comprising
- a housing;
- a first filter element having a first filter medium;
- a second filter element having a second filter medium;
the first and second filter elements being arranged inside the housing; the first and second filter media surrounding a common longitudinal axis.

### Background

Such a filter system is known from DE 10 2018 215 603 A1.

In some applications, it is required to filter a gas flow with two filter elements. Typically, the gas flows first through a first filter element and then, the prefiltered gas flows through a second filter element. The filter elements can be arranged in a common housing. This kind of filter systems is for instance used to filter combustion air for large combustion engines, such as for trucks, construction vehicles or the like. Another application is the filtration of air for fuel cells. For such an application typically one filter element is adapted to filter particles and the other filter element is adapted to adsorb or absorb harmful gases.

DE 10 2018 215 603 A1 discloses a gas filter system with a first filter element which surrounds a second filter element. At a first axial end, open end caps of the two filter elements are associated with an outlet for clean air. At a second axial end, the first (outer) filter element has an open end cap and the second (inner) filter element has a closed end cap. The closed end cap of the inner filter element is arranged to close the opening in the end cap of the outer filter element at the second axial end. The outer filter element can have a support tube with a collar, which extends radially inwardly and covers an opening of the end cap of the outer filter element at the first axial end partially. The collar forms a contact surface for sealing abutment of the open end cap of the inner filter element.

A filter system with two concentrically arranged filter elements and a sealing arrangement is disclosed in WO 2022/194544 A1.

Filter elements with sealing surfaces are disclosed in EP 1 036 585 A1, US 5 250 179 A, US 6 093 231 A and US 2019/240602 A1.

It is an object of the invention to provide a gas filter system with improved sealing between two filter elements, which are adapted for joint use, in particular wherein the use of compatible filter elements is required.

This is achieved by a gas filter system according to claim 1 and use of filter elements according to claim 10. Advantageous embodiments are given in the subclaims and the description.

### Disclosure of the invention

In accordance with the invention, a gas filter system is provided. The gas filter system comprises
- a housing;
- a first filter element having a first filter medium; and
- a second filter element having a second filter medium.

The first and second filter elements are arranged inside the housing. Typically, the first filter medium surrounds the second filter medium.

The first and second filter media surround a common longitudinal axis. In particular, the filter media may be arranged concentric to the common longitudinal axis. Indications of directions such as radial or axial refer to the longitudinal axis.

The first filter medium is arranged between a first end cap and a second end cap. Likewise, the second filter medium is arranged between a third end cap and a fourth end cap. The first and third end caps are associated with a first axial end; the second and fourth end caps are associated with a second axial end. The first and third end caps are generally open. They each have a central opening.

During use of the gas filter system, a gas flow is typically first directed from radially outside through the first filter medium of the first filter element and then through the second filter medium of the second filter element. Alternatively, the gas flow may first be directed through the second filter medium and then through the first filter medium.

According to the invention, a flexible sealing lip protrudes, preferably in the axial direction, from the first filter medium. Preferably, the sealing lip is integrally made with a first end cap of the first filter element. This facilitates manufacturing of the first filter element. The sealing lip or the first end cap comprising the sealing lip may be made of polyurethane, in particular polyurethane foam.

The housing has a first sealing surface for sealing abutment against the sealing lip. The first sealing surface may face in the radial direction, preferably radially inwardly. The housing, including the first sealing surface, may be made of rigid plastic. The first sealing surface is generally rigid.

Generally, the housing has an inlet for raw gas to be filtered and an outlet for filtered gas. The inlet is in fluid communication with a raw side, which is preferably located radially outside the outer one of the filter elements. The outlet is in fluid communication with a clean side, which is preferably located radially inside the inner one of the filter elements. Preferably, the outlet is arranged at the first axial end, at which the sealing arrangement of the invention is provided.

Typically, the housing comprises a first housing part associated with the first end and a second housing part associated with the second end. The inlet may be formed at the first or second housing part. The outlet is preferably formed at the first housing part.

Further according to the invention, a rigid sealing rib protrudes from the second filter element. The sealing rib has a second sealing surface for sealing abutment against the sealing lip, wherein the second sealing surface faces radially outwardly. The sealing rib can be made of rigid plastic.

The invention provides that the sealing lip is compressed between the first sealing surface and the second sealing surface. In this way, the first filter element is sealed against the housing. Likewise, the second filter element is sealed against the first filter element. Thus, at the first axial end, a gas flow around the filter elements is prevented. Tightly sealing the sealing lip of the first filter element against the housing and the second filter element requires compression of the sealing lip by the sealing rib of the second filter element. Therefore, it is ensured that only compatible filter elements can be used.

The terms "flexible" and "rigid" are to be understood relative to another. I.e., the sealing lip is softer than the sealing rib or the sealing surface of the housing.

At a second axial end, the filter elements may be sealed against the housing and/or each other. Preferably, both the first and the second filter elements are closed at the second end. In particular, the second and/or fourth end caps can be monolithically closed. Alternatively, a closing means, such as a closed end face of a support tube, can be sealingly attached to the second or fourth end cap.

Preferably, the sealing lip is compressed in the radial direction (with respect to the longitudinal axis). Radial sealing may be established in this way. Particularly high contact pressures for reliable sealing can be achieved with radial compression, without enforcing high load on the filter media.

The first sealing surface can be formed at an axial collar of the housing. The collar can provide a stiff sealing surface, which in particular faces in the radial direction.

Preferably, the collar has at least one protrusion protruding beyond the first sealing surface in the radial direction. The protrusion is generally provided at a free end of the collar. To provide a sealing contact of the first sealing surface and the sealing lip, the sealing lip needs to be bent behind the protrusion. Thus, the protrusion ensures that sealing abutment of the sealing lip and the first sealing surface is only established if the sealing rib of the second filter element is present.

The collar may have at least one recess, which stands back behind the first sealing surface in the radial direction. The recess is generally provided at a free end of the collar. The recess can facilitate insertion of the sealing lip. Further, the recess can prevent the use of an unsuitable first filter element.

Preferably, the housing has a groove for engagement of the sealing lip, the first sealing surface being a (first) radial face of the groove. The groove may provide for the first sealing surface to be geometrically stiffened. Further, inserting the sealing lip into the groove is favorable for mounting of the first filter element.

The filter elements may be cylindrical or conical with a circular or oval cross section. In case of a filter element with circular cross section, the sealing lip, the first sealing surface and the sealing rib are typically circular. Alternatively, they may be provided with a radial indentation or a radial bulge. The latter enforces a defined rotational orientation about the longitudinal axis to be met for mounting of the filter system.

In an advantageous embodiment, circumferential interlocking of the sealing rib and the housing is provided. Thus, in the mounted state, the second filter element cannot be rotated around the longitudinal axis relative to the housing.

In particular, at least one tooth and at least one notch for mutual engagement can be provided on the sealing rib or the housing, respectively. In this way, it can be ensured, that the second filter element is adapted for use with the housing of the filter system. Preferably, the sealing rib has a first tooth-notch-structure and the housing has a second, corresponding tooth-notch-structure. The tooth-notch-structure of the housing may form a second radial face of the groove. The sealing lip of the filter element abuts the outer walls of the tooth-notch-structure of the housing and the sealing rib respectively. Furthermore, the teeth of the second tooth-notch-structure can provide additional guidance to the sealing lip.

The invention also relates to a filter element, in particular for use as a second filter element of a gas filter system according to the invention as described above. The filter element comprises a (second) filter medium, which surrounds a longitudinal axis. A rigid sealing rib protrudes from the filter element, the sealing rib having a (second) sealing surface. The sealing rib may protrude from the second filter medium in the radial direction and/or in the axial direction. The sealing rib allows pressing a sealing lip of a (first) filter element against a sealing surface of a housing, in order to seal the first filter element against the housing and the second filter element against the first filter element.

The second sealing surface faces in the radial direction. Radial sealing may be established in this way. Particularly high contact pressures for reliable sealing can be achieved with radial compression, without enforcing load on the filter media.

The sealing rib can be integrally made with a (third) end cap of the (second) filter element. This facilitates manufacturing of the (second) filter element. The sealing rib or the (third) end cap comprising the sealing rib may be made of rigid plastic. The end cap with the sealing rib can be glued to the (second) filter medium.

Preferably, the sealing rib is integrally made with a central tube of the filter element. The central tube stiffens the (second) filter element and provides support to the (second) filter medium. The central tube with the sealing rib can be made of rigid plastic. The central tube may be sealed against the (second) filter medium via a (third) end cap of the (second) filter element, which end cap can be made of polyurethane, preferably polyurethane foam. This design allows separating rigid (stiff) components (namely the central tube with the sealing rib) and soft components (namely the filter medium and the end cap) during manufacturing.

The central tube can be detachably held at the (second) filter element. Thus, the central tube can be reused upon replacement of the (second) filter element.

Alternatively, the central tube may be permanently affixed to the (second) filter element. In particular, the central tube can be glued to the (second) filter element, for instance to a (third) end cap of the (second) filter element.

The sealing rib may have a (second) tooth-notch-structure. This allows for circumferential interlocking with a corresponding (first) tooth-notch-structure of a housing.

The first or the second filter medium, in particular the second filter medium of the second filter element, can have gas-adsorbing properties and preferably contains activated carbon.

The first or the second filter medium, in particular the first filter medium of the first filter element, can be made with cellulose.

Preferably, the filter element which is flown through first is embodied to filter particles and the filter element which is flown through second is embodied to adsorb harmful gases.

The first and/or the second filter medium may be pleated such that it comprises a plurality of pleats arranged in a zig-zag shape. The pleated media is arranged to form a circumferentially closed filter bellows that may have cylindrical or conical shape, preferably with a circular or oval cross section.

The invention further relates to the use of a first filter element and/or a second filter element in a gas filter system according to the invention, as described above.

### Brief description of drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
- Fig. 1: shows a first embodiment of a gas filter system according to the invention, the gas filter system comprising a first filter element, a second filter element and a housing, in a schematic sectional view;
- Fig. 2: shows a first end of the filter system of Fig. 1 in an enlarged view;
- Fig. 3: shows a first end of the second embodiment of a filter system according to the invention in a first schematic sectional view with a sectional plane comprising a longitudinal axis;
- Fig. 4: shows the first end of the second embodiment in a second schematic sectional view with a different sectional plane comprising the longitudinal axis;
- Fig. 5: shows the first end of the of the second embodiment in a third schematic sectional view with a sectional plane perpendicular to the longitudinal axis;
- Fig. 6: shows a partially cut, perspective view of the second embodiment;
- Fig. 7: shows a first end of a third embodiment of a filter system according to the invention in a first schematic sectional view with a sectional plane comprising a longitudinal axis;
- Fig. 8: shows the first end of the third embodiment in a second schematic sectional view with a different sectional plane comprising the longitudinal axis;
- Fig. 9: shows a partially cut, perspective view of the third embodiment;
- Fig. 10: shows the first end of the third embodiment in a partially mounted state in a schematic sectional view with the sectional plane oriented as in Fig. 7.

### Detailed description

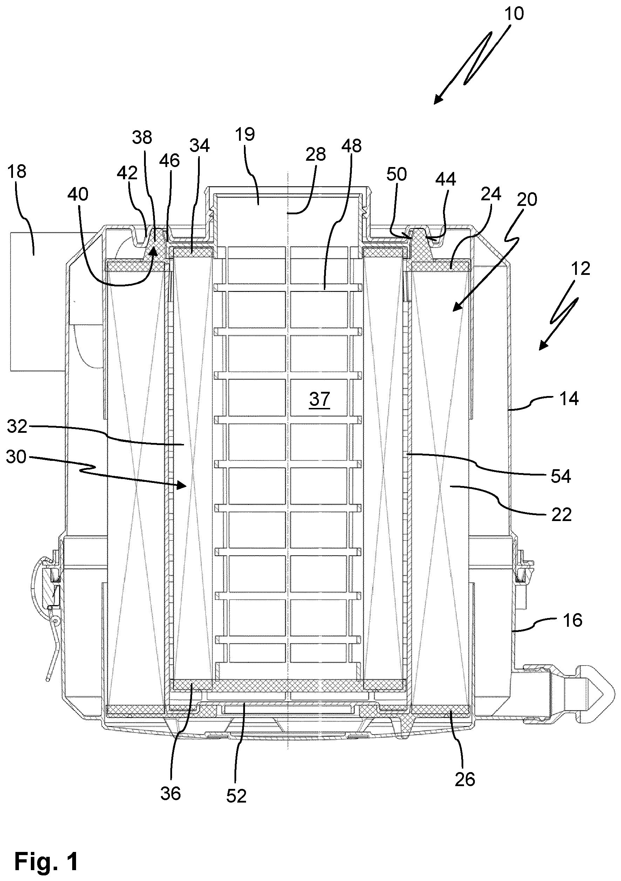

**Figure 1** shows a gas filter system **10.** The filter system 10 comprises a housing **12.** The housing has a first housing part **14** and a second housing part **16,** which are attachable to each other. An inlet **18** allows gas to enter the housing 12. Here the inlet 18 is formed at the first housing part 16. An outlet **19** for filtered gas is also formed at the first housing part 16. The housing parts 14, 16 can be made from metal and/or rigid plastic.

The filter system 10 further comprises a first filter element **20.** The first filter element 20 comprises a first filter medium **22.** The first medium 22 is contained between a first end cap **24** and a second end cap **26.** The first end cap 24 has a central opening. The first filter medium 22 surrounds a longitudinal axis **28** in a ciruclar manner. The first filter medium 22 can be made from pleated cellulose paper.

The filter system 10 further comprises a second filter element **30.** The second filter element 30 comprises a second filter medium **32.** The second medium 32 is contained between a third end cap **34** and a fourth end cap **36.** The third end cap 34 has a central opening. The second filter medium 32 also surrounds the longitudinal axis 28 in a ciruclar manner. The second filter medium 32 can contain activated carbon in order to achieve gas-adsorbing properties.

In the depicted embodiment, the second filter element 30 is arranged inside the first filter element 20. Both filter elements 20, 30 are arranged inside the housing 12. Here, the first and second filter media 22, 32 are concentric to one another and to the longitudinal axis 28.

At a first axial end, the first and second filter elements 20, 30 are sealed against each other and the housing 12. The outlet 19 is in fluid communication with a clean side **37** within the inner filter element 30.

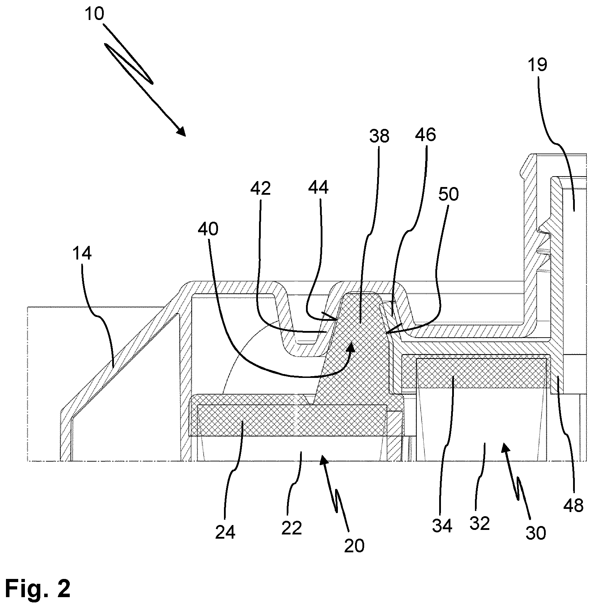

A sealing lip **38** protrudes, here in the axial direction, from the first filter element 20, see also **Figure 2****.** The sealing lip 38 is monolothic with the first end cap 24. Here, the first end cap 24 and the sealing lip 38 are integrally made from polyurethane foam. The sealing lip 38 is flexible. In particular, that the sealing lip 38 can be compressed in order to seal against sealing surfaces, as described further below.

The sealing lip 38 is engaged in an annular groove **40** of the housing 12. An axial collar **42** may form an outside wall of the groove 40. A first radial face, here the outside face, of the groove 40, which face is part of the collar 42, forms a first sealing surface **44.** In the depicted embodiment, the first sealing surface 44 faces radially inwardly.

A sealing rib **46** protrudes from the second filter element 30. Here, the sealing rib 46 extends beyond the second filter medium 32 in the radial direction towards the outside and in the axial direction.

In the depicted embodiment, the sealing rib 46 is monolithic with a central tube **48** of the second filter element 30. Here, the central tube 48 and the sealing rib 46 are integrally made from rigid plastic. The central tube 48 can be detachably or permantently held at the second filter medium 32. The third end cap 34 of the second filter element 30 provides sealing of the second filter medium 32 against the central tube 48 with the sealing rib 46. The third end cap 34 can be made from polyurethane foam. Alternatively, the the ring-shaped part connecting the central tube 48 with the rib 46 can build the third end cap 34 and the filter media 32 may be glued to this ring-shaped part.

A second sealing surface **50** is formed at the sealing rib 46. The second sealing surface 50 faces radially outwardly.

The sealing rib 46 is also engaged in the groove 40 of the housing 12. The sealing lip 38 is compressed, here in the radial direction, between the first sealing surface 44 of the housing 12 and the second sealing surface 50 of the second filter element 30. Thus, sealing between the first filter element and the housing as well as between the first filter element and the second filter element is obtained with only one sealing lip.

The housing 12 and the sealing rib 46 are stiff as compared to the sealing lip 38. I.e., the (here radial) deformation of the housing 12 at the first sealing surface 44 or of the second filter element 30 at the second sealing surface 50 is smaller, preferably by a factor of at least two or five, as the radial compression of the sealing lip 38.

The sealing lip 38, the first sealing surface 44 and the sealing rib 46 are generally circular. Optionally, they may be provided with a radial indentation or a radial bulge interfering with one another in order to make sure that the filter elements 20, 30 can be installed in the housing 12 in a defined rotational position.

At a second axial end, the first and second filter elements 20, 30 may be closed. In the depicted embodiment, the fourth end cap 36 of the second filter element 30 is a monolithic closed end cap, which can be made of polyurethane foam. The first filter element 20 is closed at the second end cap 26 by an end face **52** of a support tube **54.** The support tube 54 can be made of rigid plastic and may be partially embedded in the second end cap 26, which can be made of polyurethane foam.

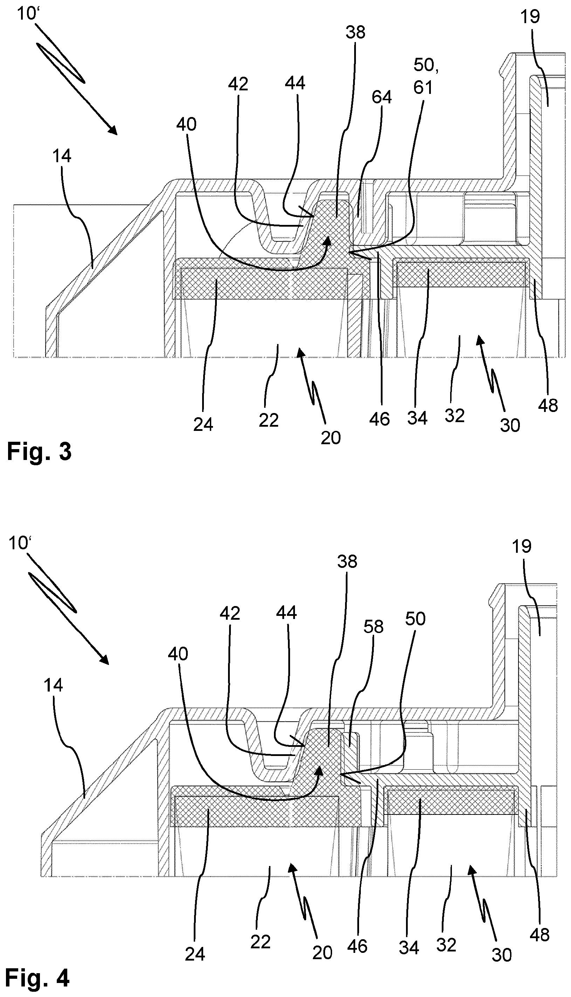

A second embodiment of the gas filter system **10',** which is partially depicted in **Figures 3, 4****,** **5** and **6****,** corresponds substantially to the first embodiment of the gas filter system 10, cf. Figures 1 and 2 and the description above. In the second embodiment, circumferential interlocking between the second filter element 30 and the housing 12, here the first housing part 14, is provided.

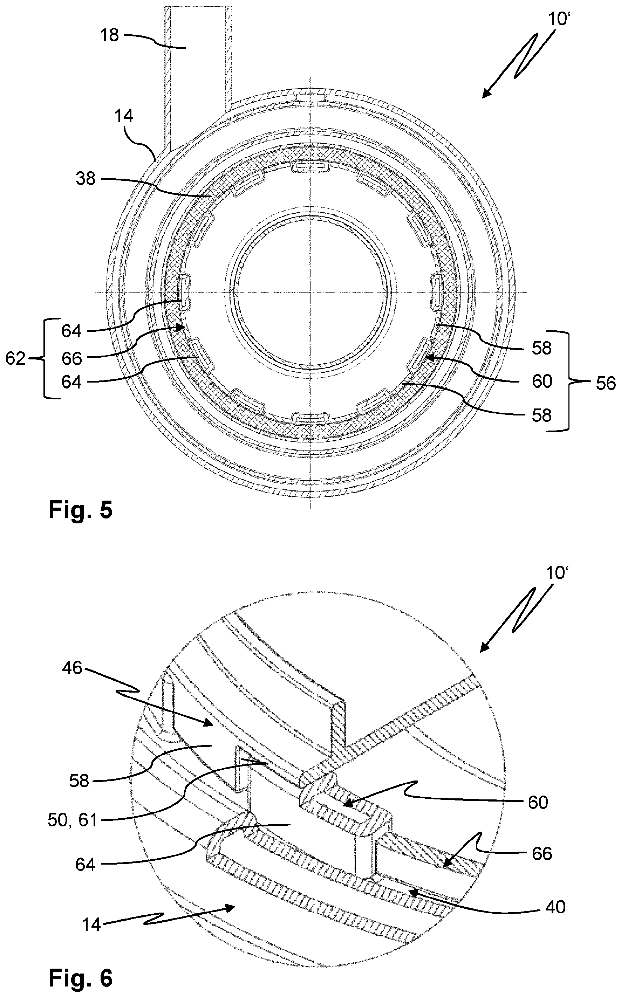

The sealing rib 46 has a first tooth-notch-structure **56** (see in particular Figure 5) comprising first teeth **58** and first notches **60** arranged between the first teeth 58. The first teeth extend axially from an annular base section **61** of the second sealing surface 50 (see in particular Figure 6).

A second tooth-notch-structure **62** of the housing part 14 forms a second radial face of the groove 40 (see in particular Figures 5 and 6). The second tooth-notch-structure 62 has second teeth **64** and second notches **66** arranged between the second teeth 64. The sealing lip 38 is received in the groove 40 between the first sealing surface and the second tooth-notch-struchture 62 (see in particular Figure 3).

The first and second tooth-notch-structures 56, 62 are adapted for mutual engagement of their teeth 58, 64 and notches 60, 66. Rotation of the second filter element 30 about the longitudinal axis 28 relative to the housing 12 is thereby prevented.

The base section 61 of the second sealing surface 50 radially presses against the sealing lip 38 continuously in circumferential direction (cf. Figure 3). In the area of the second notches 66, the first teeth 58 of the sealing rib 46 also press radially against the sealing lip 38 (cf. Figure 4). Consequently, the sealing lip 38 is sealingly clamped between the frist sealing surface 44 and the second sealing surface 50.

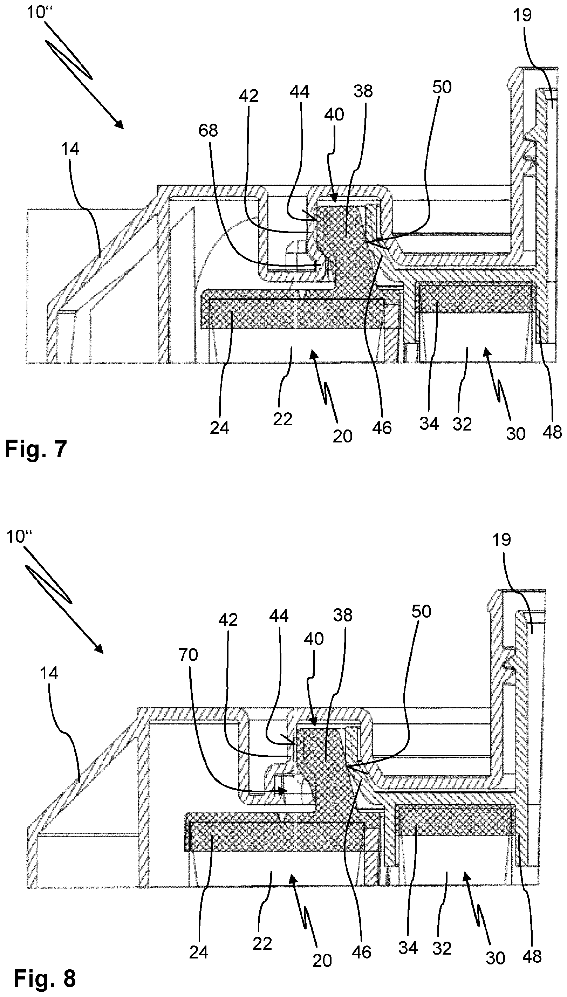

A third embodiment of the gas filter system **10**", which is partially depicted in **Figures 7, 8****,** and **9****,** corresponds substantially to the first embodiment of the gas filter system 10, cf. Figures 1 and 2 and the description above. Note that circumferential interlocking as in the second embodiment might also be provided with the third embodiment (not depicted). In the third embodiment, the collar 42, on which the first sealing surface 44 is provided, has radial protrusions **68** and radial recesses **70.** The recesses stay back behind the first sealing surface 44 and shorten the axial extension of the first sealing surface 44.

The protrusions 68 extend beyond the first sealing surface 44 towards the sealing lip 38. For sealing abutment of the sealing lip 38 against the first sealing surface 44, the sealing rib 46 deforms the sealing lip 38, such that the sealing lip 38 is bent towards the first sealing surface 44, see Figures 7 and 8. Without the deformation enforced on the sealing lip 44 by the sealing rib 46, sealing abutment of the sealing lip 44 against the first sealing surface 44 would not be possible.

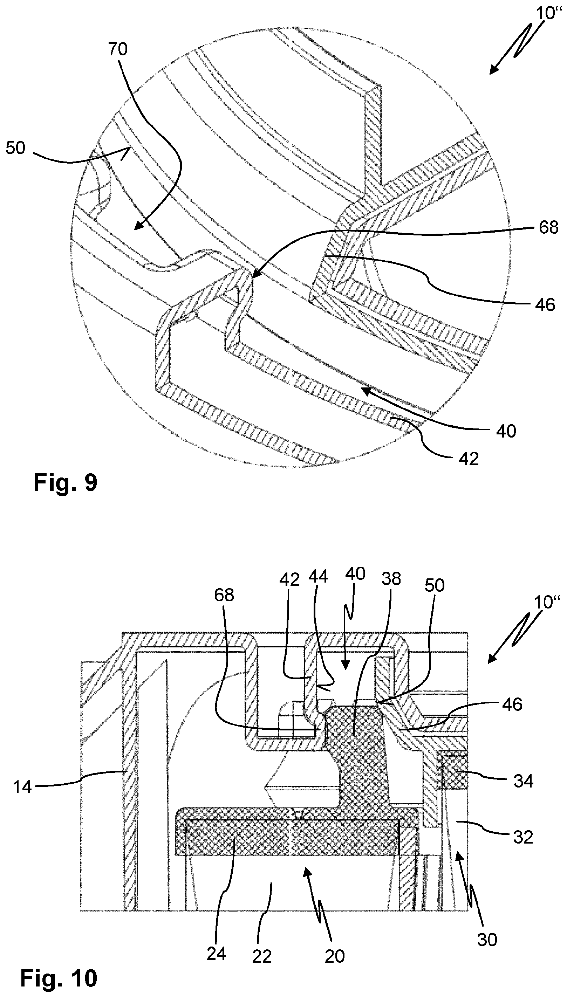

**Figure 10** shows the gas filter system 10" during mounting of the first filter element 20. The sealing lip 38 is in an undeformed state. For insertion of the sealing lip 38 into the groove 40, the sealing lip 38 has to be compressed between the protrusions 68 and the sealing rib 46. Upon further insertion, the sealing lip 38 is deflected towards the first sealing surface 44 by the sealing rib 46 with the second sealing surface 50, such that sealing abutment is achieved.

### List of reference signs

Gas filter system **10; 10'; 10"**
Housing **12**
First housing part **14**
Second housing part **16**
Inlet **18**
Outlet **19**
First filter element **20**
First filter medium **22**
First end cap **24**
Second end cap **26**
Longitudinal axis **28**
Second filter element **30**
Second filter medium **32**
Third end cap **34**
Fourth end cap **36**
Clean side **37**
Sealing lip **38**
Groove **40**
Collar **42**
First sealing surface **44**
Sealing rib **46**
Central tube **48**
Second sealing surface **50**
End face **52**
Support tube **54**
First tooth-notch-structure **56**
First teeth **58**
First notches **60**
Base section **61**
Second tooth-notch-structure **62**
Second teeth **64**
Second notches **66**
Protrusions **68**
Recesses **70**

## Claims

1. Gas filter system (10; 10'; 10") comprising
- a housing (12);
- a first filter element (20) having a first filter medium (22) being arranged between a first end cap (24) and a second end cap (26);
- a second filter element (30) having a second filter medium being arranged between a third end cap (34) and a fourth end cap (36);
the first and second filter elements (20, 30) being arranged inside the housing (12);
the first and second filter media (22, 32) surrounding a common longitudinal axis (28);
the first end cap (24) and the third end cap (34) being associated with a first axial end and having a central opening;
wherein a sealing arrangement for sealing the first filter element (20) against the housing (12) and for sealing the first filter element (20) against the second filter element (30) is provided at the first axial end;
wherein a flexible sealing lip (38) protrudes, preferably in the axial direction, from the first filter medium (22);
wherein the housing (12) has a first sealing surface (44) for sealing abutment against the sealing lip (38);
wherein a rigid sealing rib (46) protrudes from the second filter element (30), the sealing rib (46) having a second sealing surface (50) for sealing abutment against the sealing lip (38), wherein the second sealing surface (50) faces radially outwardly;
and wherein the sealing lip (38) is compressed between the first sealing surface (44) and the second sealing surface (50).

2. Gas filter system (10; 10'; 10") according to claim 1, wherein the sealing lip (38) is integrally made with a first end cap (24) of the first filter element (20).

3. Gas filter system (10; 10'; 10") according to any one of the preceding claims, wherein the sealing lip (38) is compressed in the radial direction.

4. Gas filter system (10; 10'; 10") according to any one of the preceding claims, wherein the first sealing surface (44) is formed at an axial collar (42) of the housing (12).

5. Gas filter system (10") according to claim 4, wherein the collar (42) has at least one protrusion (68) protruding beyond the first sealing surface (44) in the radial direction.

6. Gas filter system (10") according to claim 4 or 5, wherein the collar (42) has at least one recess (70), which stands back behind the first sealing surface (44) in the radial direction.

7. Gas filter system (10; 10'; 10") according to any one of the preceding claims, wherein the housing (12) has a groove (40) for engagement of the sealing lip (38), the first sealing surface (44) being a radial face of the groove (40).

8. Gas filter system (10') according to any one of the preceding claims, wherein circumferential interlocking of the sealing rib (46) and the housing (12) is provided.

9. Gas filter system (10') according to claim 8, wherein at least one tooth (58, 64) and at least one notch (60, 66) for mutual engagement are provided on the sealing rib (46) or the housing (12), respectively.

10. Use of a first filter element (20) and/or a second filter element (30) in a gas filter system (10; 10'; 10") according to any one of the claims 1 to 9.

## Patentansprüche

1. Gasfiltersystem (10; 10'; 10") umfassend
- ein Gehäuse (12);
- ein erstes Filterelement (20) mit einem ersten Filtermedium (22), das zwischen einer ersten Endkappe (24) und einer zweiten Endkappe (26) angeordnet ist;
- ein zweites Filterelement (30) mit einem zweiten Filtermedium, das zwischen einer dritten Endkappe (34) und einer vierten Endkappe (36) angeordnet ist;
wobei das erste und das zweite Filterelement (20, 30) innerhalb des Gehäuses (12) angeordnet sind;
wobei das erste und das zweite Filtermedium (22, 32) eine gemeinsame Längsachse (28) umgeben;
wobei die erste Endkappe (24) und die dritte Endkappe (34) einem ersten axialen Ende zugeordnet sind und eine zentrale Öffnung haben;
wobei an dem ersten axialen Ende eine Dichtungsanordnung zum Abdichten des ersten Filterelements (20) gegenüber dem Gehäuse (12) und zum Abdichten des ersten Filterelements (20) gegenüber dem zweiten Filterelement (30) vorgesehen ist;
wobei eine flexible Dichtlippe (38) vorzugsweise in axialer Richtung aus dem ersten Filtermedium (22) herausragt;
wobei das Gehäuse (12) eine erste Dichtfläche (44) zum abdichtenden Anliegen an der Dichtlippe (38) aufweist;
wobei eine starre Dichtrippe (46) aus dem zweiten Filterelement (30) herausragt, wobei die Dichtrippe (46) eine zweite Dichtfläche (50) zum abdichtenden Anliegen an der Dichtlippe (38) hat, wobei die zweite Dichtfläche (50) radial nach außen gerichtet ist;
und wobei die Dichtlippe (38) zwischen der ersten Dichtfläche (44) und der zweiten Dichtfläche (50) zusammengedrückt wird.

2. Gasfiltersystem (10; 10'; 10") nach Anspruch 1, wobei die Dichtungslippe (38) einstückig mit einer ersten Endkappe (24) des ersten Filterelements (20) ausgebildet ist.

3. Gasfiltersystem (10; 10'; 10") nach einem der obigen Ansprüche, wobei die Dichtlippe (38) in radialer Richtung zusammengedrückt ist.

4. Gasfiltersystem (10; 10'; 10") nach einem der obigen Ansprüche, wobei die erste Dichtfläche (44) an einem axialen Kragen (42) des Gehäuses (12) ausgebildet ist.

5. Gasfiltersystem (10") nach Anspruch 4, wobei der Kragen (42) mindestens einen Vorsprung (68) aufweist, der in radialer Richtung über die erste Dichtfläche (44) hinausragt.

6. Gasfiltersystem (10") nach Anspruch 4 oder 5, wobei der Kragen (42) mindestens eine Aussparung (70) aufweist, die in radialer Richtung hinter der ersten Dichtfläche (44) zurücksteht.

7. Gasfiltersystem (10; 10'; 10") nach einem der obigen Ansprüche, wobei das Gehäuse (12) eine Nut (40) zum Eingriff der Dichtlippe (38) aufweist, wobei die erste Dichtfläche (44) eine Radialfläche der Nut (40) ist.

8. Gasfiltersystem (10') nach einem der obigen Ansprüche, wobei eine umlaufende Verriegelung der Dichtungsrippe (46) und des Gehäuses (12) vorgesehen ist.

9. Gasfiltersystem (10') nach Anspruch 8, wobei mindestens ein Zahn (58, 64) und mindestens eine Kerbe (60, 66) zum gegenseitigen Eingriff an der Dichtungsrippe (46) bzw. dem Gehäuse (12) vorgesehen sind.

10. Verwendung eines ersten Filterelements (20) und/oder eines zweiten Filterelements (30) in einem Gasfiltersystem (10; 10'; 10") nach einem der Ansprüche 1 bis 9.

## Revendications

1. Système de filtration des gaz (10; 10'; 10") comprenant
- un boîtier (12);
- un premier élément de filtre (20) ayant un premier milieu filtrant (22) disposé entre un premier bouchon d'extrémité (24) et un deuxième bouchon d'extrémité (26);
- un deuxième élément de filtre (30) ayant un deuxième milieu filtrant disposé entre un troisième bouchon d'extrémité (34) et un quatrième bouchon d'extrémité (36);
dans lequel les premier et deuxième éléments de filtre (20, 30) sont disposés à l'intérieur du boîtier (12);
dans lequel les premier et deuxième milieux filtrants (22, 32) entourent un axe longitudinal commun (28);
dans lequel le premier bouchon d'extrémité (24) et le troisième bouchon d'extrémité (34) sont associés à une première extrémité axiale et ayant une ouverture centrale;
dans lequel un dispositif d'étanchéité pour étanchéifier le premier élément de filtre (20) par rapport au boîtier (12) et pour étanchéifier le premier élément de filtre (20) par rapport au deuxième élément de filtre (30) est prévu à la première extrémité axiale;
dans lequel une lèvre d'étanchéité flexible (38) fait saillie, de préférence dans la direction axiale, à partir du premier milieu filtrant (22);
dans lequel le boîtier (12) comporte une première surface d'étanchéité (44) destinée à venir en butée d'étanchéité contre la lèvre d'étanchéité (38);
dans lequel une nervure d'étanchéité rigide (46) fait saillie à partir du deuxième élément de filtre (30), la nervure d'étanchéité (46) ayant une deuxième surface d'étanchéité (50) destinée à venir en butée d'étanchéité contre la lèvre d'étanchéité (38), dans lequel la deuxième surface d'étanchéité (50) est orientée radialement vers l'extérieur;
et dans lequel la lèvre d'étanchéité (38) est comprimée entre la première surface d'étanchéité (44) et la deuxième surface d'étanchéité (50).

2. Système de filtration des gaz (10; 10'; 10") selon la revendication 1, dans lequel la lèvre d'étanchéité (38) est réalisée d'un seul tenant avec un premier bouchon d'extrémité (24) du premier élément de filtre (20).

3. Système de filtration des gaz (10; 10'; 10") selon l'une quelconque des revendications précédentes, dans lequel la lèvre d'étanchéité (38) est comprimée dans la direction radiale.

4. Système de filtration des gaz (10; 10'; 10") selon l'une quelconque des revendications précédentes, dans lequel la première surface d'étanchéité (44) est formée au niveau d'un collier axial (42) du boîtier (12).

5. Système de filtration des gaz (10") selon la revendication 4, dans lequel le collier (42) comporte au moins une saillie (68) dépassant de la première surface d'étanchéité (44) dans la direction radiale.

6. Système de filtration des gaz (10") selon la revendication 4 ou 5, dans lequel le collier (42) comporte au moins un évidement (70) qui est en retrait derrière la première surface d'étanchéité (44) dans la direction radiale.

7. Système de filtration des gaz (10; 10'; 10") selon l'une quelconque des revendications précédentes, dans lequel le boîtier (12) comporte une rainure (40) pour l'engagement de la lèvre d'étanchéité (38), la première surface d'étanchéité (44) étant une face radiale de la rainure (40).

8. Système de filtration des gaz (10') selon l'une quelconque des revendications précédentes, dans lequel un verrouillage circonférentiel de la nervure d'étanchéité (46) et du boîtier (12) est prévu.

9. Système de filtration des gaz (10') selon la revendication 8, dans lequel au moins une dent (58, 64) et au moins une encoche (60, 66) destinées à s'engager mutuellement sont prévues respectivement sur la nervure d'étanchéité (46) ou le boîtier (12).

10. Utilisation d'un premier élément de filtre (20) et/ou d'un deuxième élément de filtre (30) dans un système de filtration des gaz (10; 10'; 10") selon l'une quelconque des revendications 1 à 9.
